(19) **Europäisches Patentamt / European Patent Office / Office européen des brevets**

(11) **EP 1 995 844 B1**

(12) # EUROPEAN PATENT SPECIFICATION

(45) Date of publication and mention
of the grant of the patent:
**03.11.2010 Bulletin 2010/44**

(21) Application number: **07711034.4**

(22) Date of filing: **02.03.2007**

(51) Int Cl.:
*H04M 3/30* (2006.01)

(86) International application number:
**PCT/CN2007/000663**

(87) International publication number:
**WO 2007/104232 (20.09.2007 Gazette 2007/38)**

(54) **A METHOD FOR DETECTING CONNECTION OF REMOTE POWER SUPPLY AND A LINE POWERING METHOD AND SYSTEM**

VERFAHREN ZUR DETEKTION DER VERBINDUNG EINER FERNSTROMVERSORGUNG UND NETZBESTROMUNGSVERFAHREN UND SYSTEM

PROCÉDÉ PERMETTANT DE DÉTECTER LA CONNEXION D'UNE ALIMENTATION ÉLECTRIQUE À DISTANCE ET PROCÉDÉ ET SYSTÈME D'ALIMENTATION DE LIGNE ÉLECTRIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **10.03.2006 CN 200610058189**

(43) Date of publication of application:
**26.11.2008 Bulletin 2008/48**

(73) Proprietor: **Huawei Technologies Co., Ltd.
Longgang District, Shenzhen
Guangdong 518129 (CN)**

(72) Inventors:
• **QIN, Zhen
Guangdong 518129 (CN)**
• **ZHOU, Yingjie
Guangdong 518129 (CN)**

• **LIANG, Yuanhong
Guangdong 518129 (CN)**
• **ZHOU, Jiaqian
Guangdong Province 518129 (CN)**
• **ZHONG, Wenbiao
Guangdong 518129 (CN)**

(74) Representative: **Hengelhaupt, Jürgen et al
Gulde Hengelhaupt Ziebig & Schneider
Patentanwälte - Rechtsanwälte
Wallstrasse 58/59
10179 Berlin (DE)**

(56) References cited:
**CN-A- 1 719 858        GB-A- 2 223 379
US-A- 3 870 822         US-A- 5 974 553
US-B1- 6 606 383**

EP 1 995 844 B1

## Description

The present invention claims a priority to Chinese Patent Application No. 200610058189.5, entitled "System and Method for Remote Power Supplying, Method for Detecting Connection of Remote Power Source", filed on 10th March, 2006.

## Field of the Invention

The present invention relates to the field of electronics and communication technology; and in particular to a method and system for remote power supplying.

## Background of the Invention

With the continuous increasing of communication service requirement, the carriers keep on developing new services for end users by using the already installed subscriber line networks, or providing new services by laying new subscriber networks. A general way is to move the broadband and narrowband products closer to the subscriber, in which twisted pairs or coaxial cables are used as up links, and more subscribers and services can be configured on the subscriber side. However, when moving devices to the subscriber side, the powering becomes a practical problem difficult to be solved, due to the complicated subscriber environment and inconvenience of supplying power in most cases.

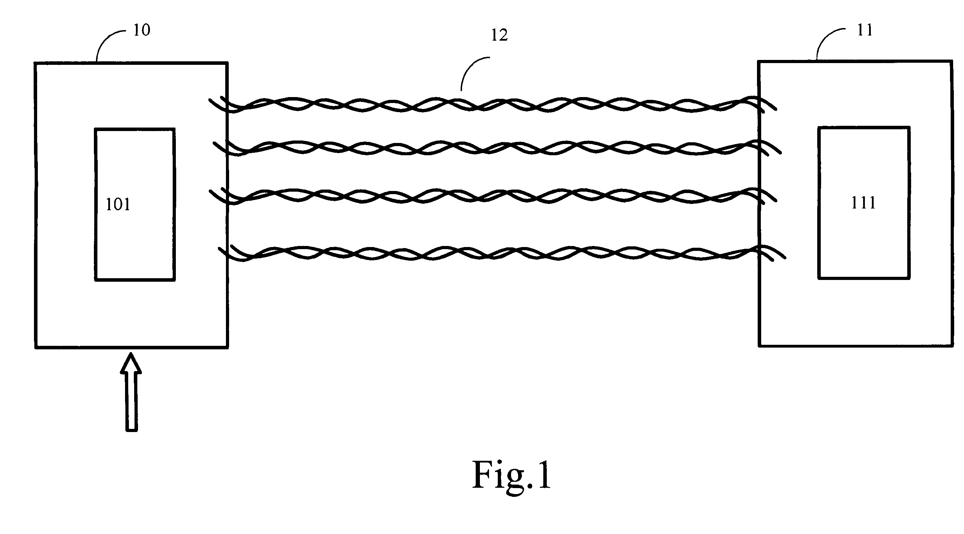

Under this circumstance, the carriers use a method for supplying power from the office end (i.e., Line Powering), which is an essential technical solution for expanding services and subscribers. Fig. 1 shows the operating principle of a typical remote power supply system using this method. The remote power supply system includes a central office apparatus 10 and a remote apparatus 11; a power supply module in the central office apparatus 101 supplies a feeding high voltage to a powered device in the remote apparatus 111 via the subscriber line 12, such as twisted pairs or coaxial cables.

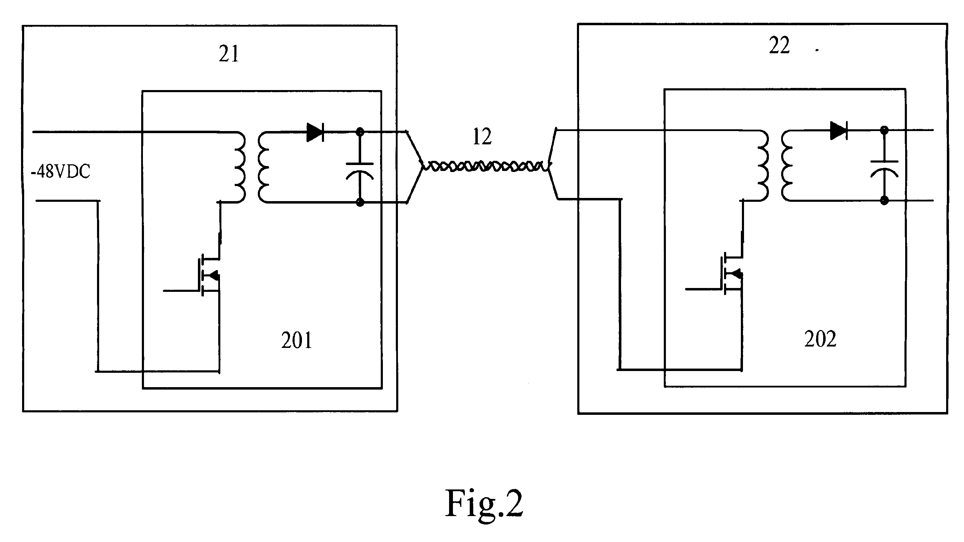

Fig. 2 is a detailed circuit diagram of the above remote power supply system. As shown in Fig. 2, a voltage conversion unit 201 in the central office power source 21 includes, but is not limited to, a transformer, a diode and a MOS transistor, boosts an input 48V DC voltage, and supplies the boosted DC high voltage to the powered device via a pair or several pairs of subscriber lines. At the remote apparatus 22, a voltage conversion unit 202 reduces the DC high voltage fed through the subscriber lines, and the reduced DC voltage is used as a power for the remote communication device (now shown). Here the communication device may be an xDSL device, etc.

It has been found that the above prior art has at least the following problem.

In the remote power supply system, the boosted voltage generated by the voltage conversion unit at the central office is normally a dangerous voltage higher than 60V, and is transferred to the powered device through the existing low voltage communication network. Since it cannot be determined whether the powered device is reliably connected (hereafter referred to as "ready"), when the high voltage is output and the powered device is not reliably connected, the possibility that the maintenance and operating staff may get shocked will increase when they touch the wire.

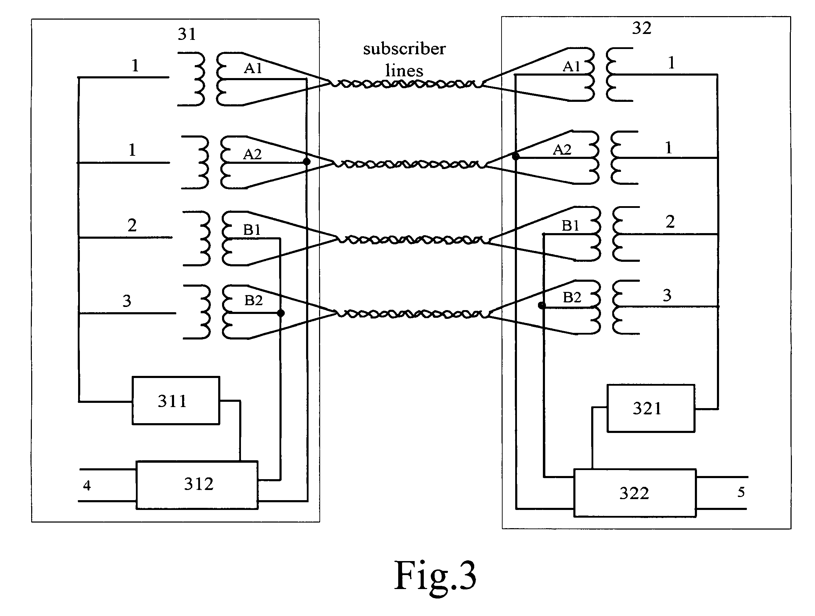

Another remote power supply system is shown in Fig. 3, which includes a central office power source 31, a powered device 32 and at least four pairs of subscriber lines 33. Where, the central office power source 31 and the powered device 32 can communicate via the communication channels A1, A2, B1 and B2, and the signal processing for the central office power source 31 and the powered device 32 are performed via the internal control circuit 311, 321 and power conversion circuit 312, 322 at the central office power source and the powered device, respectively. Furthermore, the communication channels A1, A2, B1 and B2 also carry the remote power transmission. The communication channels A1 and A2 couple to signal input terminal 1, the communication channel B1 couples to signal transmitting terminal 2, and the communication channel B2 couples to signal receiving terminal 3. The power conversion circuit 312 of the central office power source 31 is connected to a power input terminal 4, and the power conversion circuit 322 of the powered device 32 is connected to a power output terminal 5.

The purpose of the above communication is to set up power monitoring for the central office and powered device, and the detail procedure is as follows.

First, the central office power source controls the power conversion circuit to output a DC low voltage usually lower than 60V, which is used as the power needed for operating the control circuit at the powered device;

After the central office and the powered device establishing the communication according to a predefined protocol (it may be a general protocol such as ADSL protocol or a customized protocol), it is determined whether the powered device is ready.

When the powered device is ready, the control circuit at the central office controls the power conversion circuit at the central office to output the high voltage, so as to supply electric power to the powered device.

The above solution makes it possible for the communication signals and the electric power to share the channels without interfering each other, and implements coupling the signal to the electric power. It can effectively prevent the maintenance and operating staff from getting shocked when touching the wire, by determining whether the powered device is ready before supplying the DC high voltage to the powered device.

However, it was found that the above prior art has the following problem.

Communication circuits and the predefined communication protocol must be designed to implement the powered device communicating with the central office, which would significantly increase the design complexity in terms of both hardware and software.

Because of the high design complexity, a problem occurring in any part of the hardware and software may lead to communication abnormality, and may result in that the powered device cannot start up, and as a result, the reliability of service is degraded.

US 3 870 822 A discloses a power supply at a point remote from a control power source by way of a telephone line. The remote power supply is generally derived from a rechargeable battery. The battery charging current is only supplied to the line when it is in an "idle" state. This idle state is sensed at the power transmitter and receiver and the charging source and chargeable source are then coupled to the line. GB 2 223 379A discloses bell capacitance circuit to perform the remote measurement of the bell capacitance in the line conductors at a telephone receiver. The circuit includes a capacitor, means for charging said capacitor, line conductor of the receiver and high impedance monitoring means.

## Summary of the Invention

Embodiments of the present invention provide a method for detecting connection of a powered device, and a remote power supplying system.

An embodiment of the present invention provides a central office power source, connected with a powered device via subscriber lines, the central office power source has a power supply module, a timing and control circuit and comparator circuits.

The comparator circuits, the subscriber lines and a characteristic capacitor of the powered device form a resistor-capacitor charge/discharge loop;

The comparator circuits are adapted to detect a voltage input therein during the charge/discharge of the characteristic capacitor Ct, and output a corresponding level signal to the timing and control circuit;

The timing and control circuit is adapted to control the charge/discharge of the charge/discharge loop according to the level signal, and determines whether the powered device is ready according to a discharge time of the charge/discharge loop; and

The power supply module connected to the timing and control circuit, is configured to supply a voltage higher than 60V to the powered device when the powered device is ready.

An embodiment of the present invention provides a remote power supplying method, including the steps of:

feeding a test low voltage to a comparator circuit, providing the test low voltage to a characteristic capacitor via subscriber lines, and charging a charge/discharge loop formed of the subscriber lines and the characteristic capacitor; under the control of a timing and control circuit, stopping the feeding test low voltage when an output level of the comparator circuit is a first level; starting timing of the timing and control circuit, and controlling the charge/discharge loop to discharge;
stopping the timing of the timing and control circuit when the output level of the comparator circuit is a second level, and determining whether the powered device is ready according to a discharge time of the charge/discharge loop; and supplying a remote feeding high voltage to the powered device via the subscriber lines when determining that the powered device is ready.

An embodiment of the present invention provides a method for detecting a powered device, including the steps of:

feeding a test voltage to a comparator circuit and providing the test voltage to a characteristic capacitor of the powered device via subscriber lines;
stopping the feeding the test voltage under the control of a timing and control circuit, when an output level of the comparator circuit is a first level, so that a charge/discharge loop formed of the subscriber lines and the characteristic capacitor discharges, and starting the timing of the timing and control circuit; and stopping the timing of the timing and control circuit when the charge/discharge loop discharges to make the output level of the comparator circuit to be a second level, obtaining a discharge time, and determining whether the powered device is ready according to the discharge time.

In the technical solutions of the embodiments of the present invention, by use of the resistor-capacitor charge/discharge principle, the time difference produced in the charge/discharge procedure is used as a basis of determination for logically determining whether the powered device is ready. During the low voltage test procedure, it is checked whether the powered device is ready by using the resistor-capacitor charge/discharge, and the implementation is easy to be realized and of low cost and high reliability.

Since it is tested that the powered device is ready during the low voltage test procedure, the remote voltage is output only when the powered device is reliably connected. As a result, the technical solutions can effectively prevent electric shock from happening and guarantee the safety of the operating and maintenance staff.

**Brief Description of the Drawings**

Fig. 1 shows the operating principle of remote power supply system according to a prior art;

Fig. 2 shows a detailed circuit of the remote power supply system shown in Fig. 1;

Fig. 3 shows a detailed circuit of remote power supply system according to another prior art;

Fig. 4 is a structural diagram of a remote power supply system according to a first embodiment of the present invention;

Fig. 5 is a structural diagram of a remote power supply system according to a second embodiment of the present invention;

Fig. 6 is a structural diagram of a remote power supply system according to a third embodiment of the present invention; and

Fig. 7 is a structural diagram of a remote power supply system according to a fourth embodiment of the present invention;

**Detailed Description of the Embodiments**

A central office power source, the method for determining a powered device according to the present invention will be explained in the following with reference to the accompany drawing and embodiments.

**First Embodiment**

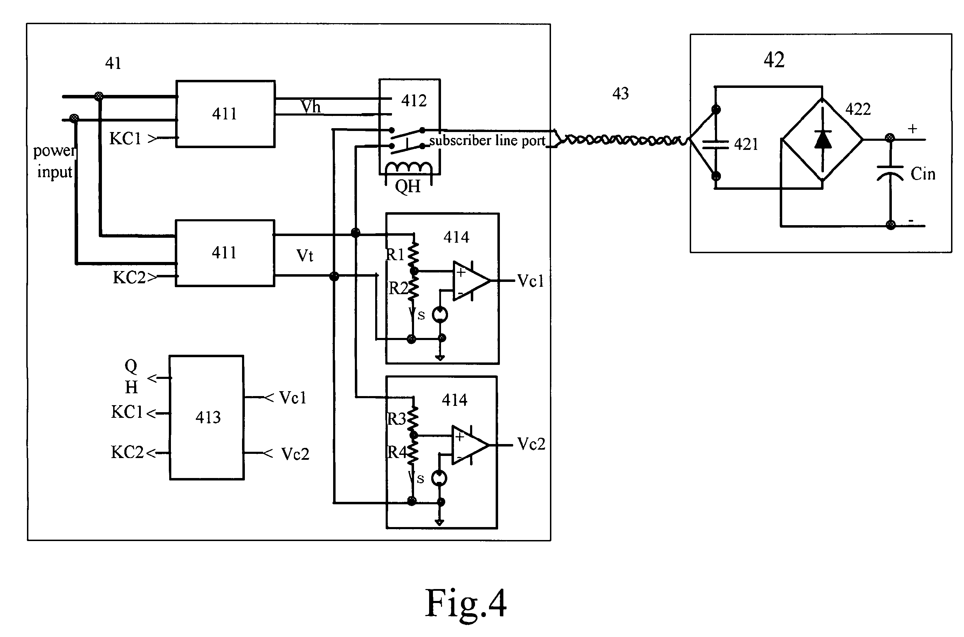

Fig. 4 shows a schematic diagram of a remote power supply system according to an embodiment of the present invention. The central office power source 41 of the remote power supply system includes a power conversion circuit 411, a switch circuit 412, a timing and control circuit 413 and a comparator circuit 414. The powered device 42 includes a characteristic capacitor Ct 421. The central office and the powered device are connected via subscriber lines 43, which may be equivalent to a resistor Rp and a distributed capacitor Cp. The powered device is further provided with a diode circuit (or a bridge rectifier) Dz 422.

In the central office power source, the power conversion circuit generates a test low voltage Vt and a feeding high voltage Vh, where the test low voltage V1 is usually lower than 60V and the feeding high voltage Vh is usually a DC voltage higher than 60V. In Fig. 4, two power conversion circuits are used to provide the test low voltage Vt and the feeding high voltage Vh respectively; and one of the test low voltage Vt and remote feeding high voltage Vh is supplied to the powered device via the subscriber line, by the switching of the switch circuit. However, in an embodiment of the present invention, the system also includes one power conversion circuit, which outputs the test low voltage Vt and the feeding high voltage Vh by correspondingly converting the input voltage. It should be noted that only one of the test low voltage Vt and the feeding high voltage Vh is supplied to the powered device via the subscriber line at a time.

The test low voltage Vt output from the power conversion circuit is fed to a first comparator circuit 1 and a second comparator circuit2, respectively. The first comparator circuit 1 and the second comparator circuit 2 are adapted to detect a voltage input therein during the charge/discharge of the characteristic capacitor Ct, and output a corresponding voltage according to a change in the voltage input to the characteristic capacitor Ct. The first comparator circuit 1 includes a voltage divider network composed of resistors R1 and R2, a reference power source and a comparator. The non-inverse input of the comparator is a terminal voltage of the resistor R2; the inverse input of the comparator is an internal reference voltage Vs; and the output voltage Vc1 of the comparator is output to the timing and control circuit, as a first input voltage. The second comparator circuit 2 includes a voltage divider network composed of resistors R3 and R4 and a comparator. The non-inverse input of the comparator is a terminal voltage of resistor R4; the inverse input of the comparator is an internal reference voltage Vs; and the output voltage Vc2 of the comparator is output to the timing and control circuit, as a second input voltage.

In the first comparator circuit 1 and the second comparator circuit 2, resistors R1, R2, R3 and R4 form voltage divider networks for detecting the test low voltage Vt; and the test low voltage Vt is compared with the internal reference voltage Vs so as to output a corresponding high/low level.

As shown in Fig. 4, when the first comparator circuit 1 and the second comparator circuit 2 detect the test low voltage, assuming that the test low voltage Vt starts to increase from 0V, then there exist the following cases:

(1). if the test low voltage Vt is smaller than both a first predetermined voltage $Vt1=Vs\times(1+R1/R2)$ and a second predetermined voltage $Vt2=Vs\times(1+R3/R4)$, that is, Vt1>Vt and Vt2>Vt, then both the output voltage Vc1 of the first comparator circuit and the output voltage Vc2 of the second comparator circuit are low levels;

(2). if the test love voltage Vt satisfies Vt1>Vt>Vt2, then the output voltage Vc1 of the first comparator circuit 1 is low level, and the output voltage Vc2 of the comparator circuit 2 is high level; and

(3). if the test love voltage Vt satisfies Vt>Vt1>Vt2, then both the output voltage Vc1 of the first comparator circuit 1 and the output voltage Vc2 of the second comparator circuit 2 are high levels.

Here, the relationship between Vt1 and Vt2 is not limited to the above examples.

At this time, the timing and control circuit generates a switch signal QH (from high to low, or from low to high) according to the received output voltage Vc1, Vc2 output from the first comparator circuit 1 and the second comparator circuit 2, and further controls the switch circuit to switch between the test low voltage and the feeding high voltage. At the same time, the timing and control circuit also generates signals KC1 or KC2 for controlling the power conversion circuit, according to the output voltage Vc1, Vc2 of the first comparator circuit 1 and the second comparator circuit 2, and controls the output of the power conversion circuit to turn on/off.

The subscriber lines are connected to both terminals of the remote characteristic capacitor Ct; and the test low voltage Vt provide by the central office charges the remote characteristic capacitor Ct, so that the detect. Preferably the capacitance of the characteristic capacitor Ct is sufficient large with respect to the distributed capacitance Cp of the subscriber lines, so that the distributed capacitance Cp of the subscriber lines is negligible when identifying the characteristic capacitor Ct during the timing procedure. Furthermore, in order to prevent the effect of other capacitors Cin for storing electrical energy and filtering in the powered device when identifying the characteristic capacitor Ct (converting the capacitance, from the charge/discharge timing), the diode circuit (or a bridge rectifier) Dz in the powered device is used to isolate the characteristic capacitor Ct from the capacitor Cin, so that the identifying of the characteristic capacitor Ct is speeded up during the timing procedure.

When identifying the characteristic capacitor Ct, the voltage divider networks composed of R1, R2 as well as R3 and R4 together with the equivalent resistor Rp and the distributed capacitor Cp of the subscriber lines and the remote characteristic capacitor Ct form a resistor-capacitor charge/discharge loop, thereby a certain delay occurs during the charge/discharge procedure, and the time and control circuit uses the delay to perform control and timing. Here, the resistance of the voltage divider network should be sufficient large with respect to the equivalent resistance Rp of the subscriber lines, so that the affection of the resistance Rp of the subscriber lines can be ignored during the timing procedure.

The timing and control circuit obtains the distributed capacitance of the subscriber lines according to the above delay, i.e., the time period between starting and finishing the discharge timing; and compares the distributed capacitance of the subscriber lines with the characteristic capacitor Ct (e.g. $1\mu F$); if the obtained distributed capacitance satisfies a predetermined condition (e.g. larger than $1\mu F$), then the powered device is considered as being connected normally (ready).

To make the present invention more apparent, the method for determining the powered device and the remote power supplying method are explained below with reference to the operating procedure of the remote power supply system. The remote power supplying method provided in an embodiment of the present invention includes a low voltage test procedure and a remote powering procedure; the low voltage test procedure is the procedure for determining the powered device.

During the low voltage test procedure, the timing and control circuit first controls the power conversion circuit to output the test low voltage Vt, which is fed to the first comparator circuit and the second comparator circuit respectively. The test low voltage Vt is also supplied to the powered device via the subscriber lines, as the terminal voltage of the characteristic capacitor Ct. The test low voltage Vt charges the subscriber line capacitor Cp and the characteristic capacitor Ct via the voltage divider resistors of the comparator circuit and the subscriber line resistor Rp.

With the increasing from 0V of the test low voltage Vt, the output levels Vc1 of the first comparator circuit 1 and the output levels Vc2 of the second comparator circuit 2 change accordingly. When both the output levels Vc1 and Vc2 of the first comparator circuit 1 and the second comparator circuit 2 are high levels, the timing and control circuit starts timing; meanwhile, the timing and control circuit controls the power conversion circuit to disconnect the output, and the subscriber line capacitor Cp and characteristic capacitor Ct of the powered device discharge through the voltage divider resistors of the comparator circuit and the subscriber line resistor Rp.

With the progress of the discharge proceeding, the output level Vc1 of the first comparator circuit 1 and the output level Vc2 of the second comparator circuit 2 changes from high to low levels. When both the output levels Vc1 and Vc2 of the first and second comparator circuits are low levels, the timing and control circuit stops timing, computes the total capacitance of the lines (the whole charge/discharge loop) according to Eq. (1), based on the delay between starting timing and stopping timing. Then it is determined whether the powered device is ready according to the computed total capacitance of the lines.

$$U_c = U_0 \times e^{-t/\tau} \qquad (1)$$

In Eq.(1), $\tau = RC$, R is the equivalent resistance of the charge/ discharge loop, C is the equivalent capacitance of the charge/discharge loop, $U_c$ is an end voltage of the equivalent capacitor, $U_0$ is the initial voltage of the equivalent capacitor.

If the total capacitance of the lines (the whole charge/discharge loop) is larger than the characteristic capacitance $C_t$, it can be determined that the powered device is reliably connected, and that the powered device is ready; otherwise the powered device is not ready; and the low voltage test procedure is repeated.

In the above low voltage test procedure, the resistor-capacitor charge/discharge principle is used to detect whether the powered device is ready, which is easy to be implemented and low cost and high reliability.

When it is determined in the above low voltage test procedure that the powered device is ready, it proceeds to the remote powering procedure.

During the remote powering procedure, the timing and control circuit switches the switch in the switching circuit to the output terminal of the power conversion circuit that outputs the feeding high voltage by using the QH signal. Meanwhile, the timing and control circuit controls the power conversion circuit to output the feeding high voltage by using the KCI signal, and supply the high voltage power to the powered device via the subscriber lines.

Thus, since it is detected during the low voltage test procedure whether the powered device is ready, and the remote voltage is output only when the powered device is reliably connected, as a result, the electric shock can be effectively prevented from happening, and the safety of the operating and maintenance staff can be guaranteed.

**Second Embodiment**

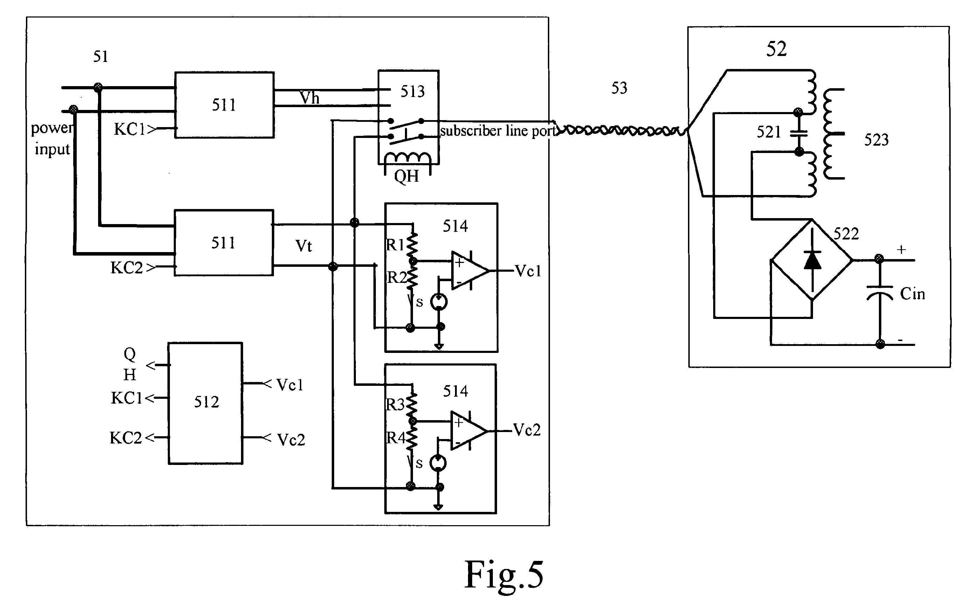

Fig. 5 shows a schematic diagram of a remote power supply system according to a second embodiment of the present invention. As shown in Fig. 5, the second embodiment is substantially the same as the first embodiment, and the difference between the two embodiments lies in that the powered device further includes a signal transformer 523 and the characteristic capacitor $C_t$ is arranged at the center tap of the signal transformer.

**Third Embodiment**

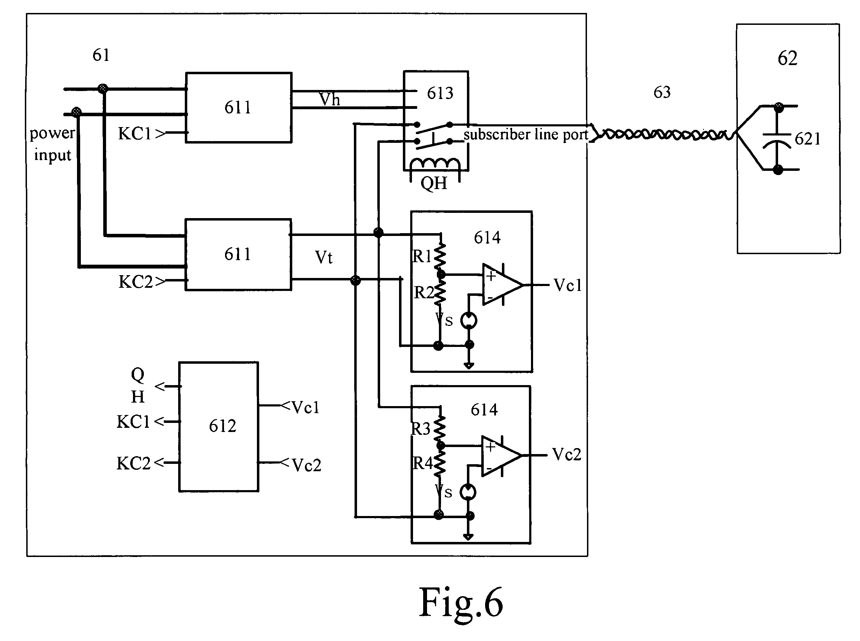

Fig. 6 shows a schematic diagram of a remote power supply system according to a third embodiment of the present invention. As shown in Fig. 6, the third embodiment is substantially the same as the first embodiment, and the difference between the two embodiments lies in that in third embodiment, the capacitor Cin 621 for storing electric energy and filtering within the powered device is directly used as the characteristic capacitor to replace the characteristic capacitor $C_t$ and the diode circuit (or a bridge rectifier) Dz. Thus, compared with the first embodiment, the remote power supply system of the third embodiment can reduce design complexity and the cost, on the basis of realizing safe powering.

**Fourth Embodiment**

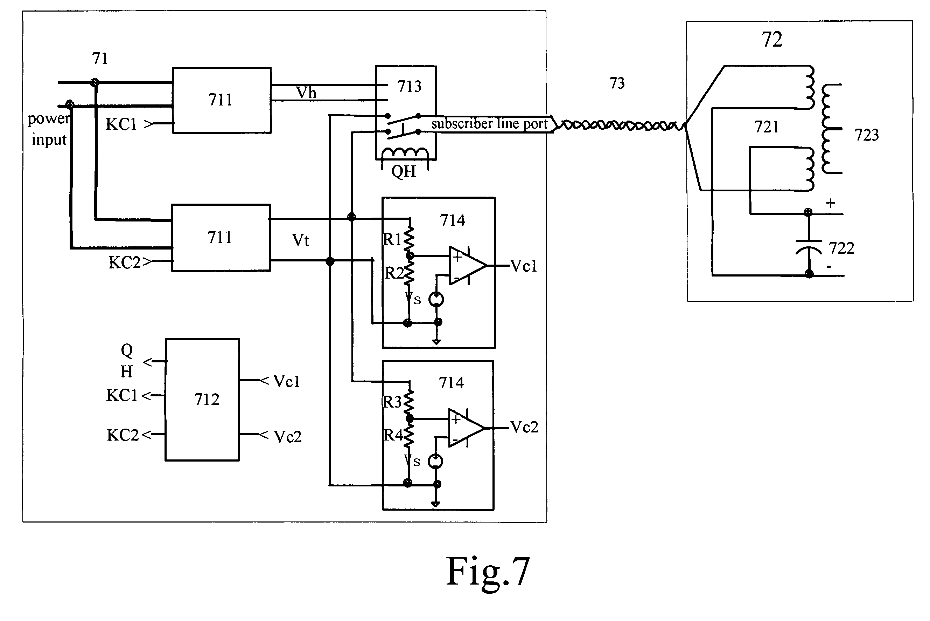

Fig. 7 shows a schematic diagram of a remote power supply system according to a fourth embodiment of the present invention. As shown in Fig. 7, the fourth embodiment is substantially the same as the third embodiment, and the difference between them lies in that the powered device further includes a signal transformer, and the capacitor Cin as the characteristic capacitor $C_t$ is arranged at the center tap of the signal transformer. Thus, compared with the second embodiment, the remote power system of the fourth embodiment can further reduce design complexity and the cost, on the basis of realizing safe powering.

It can be seen from the above embodiments that during charge and discharge processes, the two resistor networks in the comparator circuits are first connected in series and then connected in parallel, which corresponds to a resistor and can be equivalent to a loop. Furthermore, according to the same testing principle as stated above, another charge/discharge resistor network may be further added when necessary, for example, when the resistors in the comparator circuit of the above charge/discharge loop are connected, in parallel, with one or more resistors having resistances much smaller than that of any of the voltage dividing resistors, as a result, the resistance of the comparator circuit can be ignored when determining whether the powered device is ready.

Though, in the above embodiments, two comparator circuits are used, one or more comparator circuits may also be used to provide the output level, as the basis of controlling charge/discharge by the timing and control circuit.

Furthermore, though, in the above embodiments, the high level output by the comparator circuit is used to trigger the timing and control circuit to start the discharge timing, and the low level output by the comparator circuit is used to trigger the timing and control circuit to stop the timing, a low level may also be used to trigger timing start and the high level may be used to trigger timing stop.

Also, in the above embodiments, the non-inverse input of the comparator may be not limited to be the terminal voltage of the voltage dividing resistor, and the inverse input of the comparator may be not limited to be the voltage of the reference power source. On the contrary, the same effect can be achieved by taking the voltage of the reference power source as the non-inverse input and taking the terminal voltage of the voltage dividing resistor as the inverse input of the comparator, if only the trigger level for the timing and control circuit is changed to be high or low.

The above mentioned embodiments of the present invention are only exemplary, and are not intended to limit the scope of the present invention.

**Claims**

1. A central office power source, connected with a powered device via subscriber lines, **characterized in that** the central office power source comprises a power supply module, a timing and control circuit and comparator circuits;

   the comparator circuits, the subscriber lines and a characteristic capacitor of the powered device form a resistor-capacitor charge/discharge loop;

   wherein the comparator circuits are adapted to detect a voltage input therein during the charge/discharge of the characteristic capacitor, and output a corresponding level signal to the timing and control circuit;

   the timing and control circuit is adapted to control the charge/discharge of the charge/discharge loop according to the level signal, and determines whether the powered device is ready according to a discharge time of the charge/discharge loop; and

   the power supply module connected to the timing and control circuit, is configured to supply high voltage power to the powered device when the powered device is ready.

2. The central office power source according to claim 1, **characterized in that** one of the comparator circuits comprises voltage dividing resistors, a reference power source, and a comparator to which a terminal voltage of the voltage dividing resistors and a voltage of the reference power source are input, a comparison result of the comparator is output to the timing and control circuit.

3. A remote power supply system, **characterized in that**, the remote power supply system comprises a central office power source according to claim 1 or 2, and a powered device, the central office power source is connected to the powered device via the subscriber lines, the powered device has the characteristic capacitor, wherein the comparator circuit, the subscriber lines and the characteristic capacitor form a resistor-capacitor charge/discharge loop.

4. The remote power supply system according to claim 3, **characterized in that** the powered device further comprises an isolating circuit, which is connected to both terminals of the characteristic capacitor and isolates the characteristic capacitor from other capacitors in the powered device.

5. The remote power supply system according to claim 4, **characterized in that** the isolating circuit is a diode circuit or a bridge rectifier.

6. The remote power supply system according to claim 3, **characterized in that** the characteristic capacitor is a capacitor for storing electric energy or/and filtering in the powered device.

7. The remote power supply system according to claim 3 or 6, **characterized in that** the powered device further comprises a signal transformer, and the characteristic capacitor is arranged at a center tap of the signal transformer.

8. A method for detecting a powered device, comprising:

   feeding a test voltage to a comparator circuit and providing the test voltage to a characteristic capacitor of the powered device via subscriber lines;

   stopping the feeding the test voltage under the control of a timing and control circuit, when an output level of the comparator circuit is a first level, so that a charge/discharge loop formed of the subscriber lines and the characteristic capacitor discharges, and starting the timing of the timing and control circuit; and

   stopping the timing of the timing and control circuit, when the charge/discharge loop discharges to make the output level of the comparator circuit to be a second level, obtaining a discharge time, and determining whether the powered device is ready according to the discharge time.

9. The method according to claim 8, **characterized in that** the step of determining whether the powered device is ready according to the discharge time comprises:

computing a total capacitance of the whole charge/discharge loop according to the discharge time, and determining whether the powered device is ready according to the computed total capacitance of the loop; determining that the powered device is reliably connected when the total capacitance is larger than the characteristic capacitor, and accordingly determining that the powered device is ready; otherwise determining that the powered device is not ready.

10. The method according to claim 9, **characterized in** the total capacitance of the whole charge/discharge loop is computed according to the following equation,

$$U_c = U_0 \times e^{-t/\tau}$$

where $\tau$ = RC, R is an equivalent resistance of the charge/discharge loop, C is an equivalent capacitance of the charge/discharge loop, $U_c$ is an end voltage of the equivalent capacitor, $U_0$ is an initial voltage of the equivalent capacitor.

11. The method according to claim 8, **characterized in that** the characteristic capacitor is a capacitor for storing electric energy or/and filtering in the powered device.

**Patentansprüche**

1. Vermittlungsstellen-Stromquelle, die über Teilnehmerleitungen mit einer bestromten Einrichtung verbunden ist, **dadurch gekennzeichnet, dass** die Vermittlungsstellen-Stromquelle ein Stromversorgungsmodul, eine Timing- und Steuerschaltung und Komparatorschaltungen umfasst; wobei die Komparatorschaltungen, die Teilnehmerleitungen und ein charakteristischer Kondensator der bestromten Einrichtung eine Widerstand-Kondensator-Lade-/-Entladeschleife bilden;
wobei die Komparatorschaltungen dafür ausgelegt sind, während der Ladung/Entladung des charakteristischen Kondensators einen Spannungseingang darin zu detektieren und ein entsprechendes Pegelsignal an die Timing- und Steuerschaltung auszugeben;
die Timing- und Steuerschaltung dafür ausgelegt ist, das Laden/Entladen der Lade-/Entladeschleife gemäß dem Pegelsignal zu steuern, und gemäß einer Entladezeit der Lade-/Entladeschleife bestimmt, ob die bestromte Einrichtung bereit ist; und
das mit der Timing- und Steuerschaltung verbundene Stromversorgungsmodul dafür ausgelegt ist, der bestromten Einrichtung Hochspannungsstrom zuzuführen, wenn die bestromte Einrichtung bereit ist.

2. Vermittlungsstellen-Stromquelle nach Anspruch 1, **dadurch gekennzeichnet, dass** eine der Komparatorschaltungen Spannungsteilerwiderstände, eine Referenzstromquelle und einen Komparator umfasst, in denen eine Anschlussspannung der Spannungsteilerwiderstände und eine Spannung der Referenzstromquelle eingegeben werden, wobei ein Vergleichsergebnis des Komparators an die Timing- und Steuerschaltung ausgegeben wird.

3. Fernstromversorgungssystem, **dadurch gekennzeichnet, dass** das Fernstromversorgungssystem eine Vermittlungsstellen-Stromquelle nach Anspruch 1 oder 2 und eine bestromte Einrichtung umfasst, die Vermittlungsstellen-Stromquelle über die Teilnehmerleitungen mit der bestromten Einrichtung verbunden ist, die bestromte Einrichtung den charakteristischen Kondensator aufweist, wobei die Komparatorschaltung, die Teilnehmerleitungen und der charakteristische Kondensator eine Widerstand-Kondensator-Lade-/-Entladeschleife bilden.

4. Fernstromversorgungssystem nach Anspruch 3, **dadurch gekennzeichnet, dass** die bestromte Einrichtung ferner eine Isolationsschaltung umfasst, die mit beiden Anschlüssen des charakteristischen Kondensators verbunden ist und den charakteristischen Kondensator von anderen Kondensatoren in der bestromten Einrichtung isoliert.

5. Fernstromversorgungssystem nach Anspruch 4, **dadurch gekennzeichnet, dass** die Isolationsschaltung eine Diodenschaltung oder ein Brückengleichrichter ist.

6. Fernstromversorgungssystem nach Anspruch 3, **dadurch gekennzeichnet, dass** der charakteristische Kondensator ein Kondensator zum Speichern von elektrischer Energie und/oder zur Filterung in der bestromten Einrichtung ist.

7. Fernstromversorgungssystem nach Anspruch 3 oder 6, **dadurch gekennzeichnet, dass** die bestromte Einrichtung ferner einen Signalübertrager umfasst und der charakteristische Kondensator an einer Mittelanzapfung des Signalübertragers angeordnet ist.

8. Verfahren zum Detektieren einer bestromten Einrichtung, mit den folgenden Schritten:

Leiten einer Prüfspannung zu einer Komparatorschaltung und Zuführen der Prüfspannung zu einem charakteristischen Kondensator der bestromten Einrichtung über Teilnehmerleitungen;
Stoppen des Leitens der Prüfspannung unter der Kontrolle einer Timing- und Steuerschaltung, wenn ein Ausgangspegel der Komparatorschaltung ein erster Pegel ist, so dass sich eine aus den Teilnehmerleitungen und dem charakteristischen Kondensator gebildete Lade-/Entladeschleife entlädt, und Starten des Timings der Timing- und Steuerschaltung; und
Stoppen des Timings der Timing- und Steuerschaltung, wenn sich die Lade-/Entladeschleife entlädt, um zu bewirken, dass der Ausgangspegel der Komparatorschaltung ein zweiter Pegel wird, Erhalten einer Entladezeit und Bestimmen, ob die bestromte Einrichtung bereit ist, gemäß der Entladezeit.

9. Verfahren nach Anspruch 8, **dadurch gekennzeichnet, dass** der Schritt des Bestimmens, ob die bestromte Einrichtung bereit ist, gemäß der Entladezeit, Folgendes umfasst:

Berechnen einer Gesamtkapazität der ganzen Lade-/Entladeschleife gemäß der Entladezeit und Bestimmen, ob die bestromte Einrichtung bereit ist, gemäß der berechneten Gesamtkapazität der Schleife; Bestimmen, dass die bestromte Einrichtung zuverlässig verbunden ist, wenn die Gesamtkapazität größer als der charakteristische Kondensator ist, und entsprechendes Bestimmen, dass die bestromte Einrichtung bereit ist; andernfalls Bestimmen, dass die bestromte Einrichtung nicht bereit ist.

10. Verfahren nach Anspruch 9, **dadurch gekennzeichnet, dass** die Gesamtkapazität der gesamten Lade-/Entladeschleife gemäß der folgenden Gleichung berechnet wird:

$$U_c = U_0 \times e^{-t/\tau}$$

wobei $\tau = RC$, R ein Ersatzwiderstand der Lade-/Entladeschleife, C eine Ersatzkapazität der Lade-/Entladeschleife, $U_c$ eine Endspannung des Ersatzkondensators und $U_0$ eine Anfangsspannung des Ersatzkondensators ist.

11. Verfahren nach Anspruch 8, **dadurch gekennzeichnet, dass** der charakteristische Kondensator ein Kondensator zum Speichern von elektrischer Energie und/oder zum Filtern in der bestromten Einrichtung ist.

**Revendications**

1. Source d'alimentation électrique de central, connectée à un dispositif alimenté électriquement par l'intermédiaire de lignes d'abonnés, **caractérisée en ce que** la source d'alimentation électrique de central comprend un module d'alimentation électrique, un circuit de chronométrage et de commande et des circuits comparateurs ; les circuits comparateurs, les lignes d'abonnés et un condensateur caractéristique du dispositif alimenté électriquement formant une boucle de charge/décharge à résistance-condensateur ;
dans lequel les circuits comparateurs sont aptes à détecter une tension qui leur est fournie pendant la charge/décharge du condensateur caractéristique, et à délivrer au circuit de chronométrage et de commande un signal de niveau correspondant ;
le circuit de chronométrage et de commande est apte à commander la charge/décharge de la boucle de charge/décharge en fonction du signal de niveau, et détermine si le dispositif alimenté électriquement est prêt en fonction d'un temps de décharge de la boucle de charge/décharge ; et
le module d'alimentation électrique connecté au circuit de chronométrage et de commande est configuré pour délivrer une alimentation à haute tension au dispositif alimenté électriquement lorsque le dispositif alimenté électriquement est prêt.

**2.** Source d'alimentation électrique de central selon la revendication 1, **caractérisée en ce que** l'un des circuits comparateurs comprend des résistances de division de tension, une source d'alimentation de référence et un comparateur auquel sont fournies une tension aux bornes des résistances de division de tension et une tension de la source d'alimentation de référence, un résultat de comparaison du comparateur étant fourni au circuit de chronométrage et de commande.

**3.** Système d'alimentation électrique à distance, **caractérisé en ce que** le système d'alimentation électrique à distance comprend une source d'alimentation électrique de central selon la revendication 1 ou 2, et un dispositif alimenté électriquement, la source d'alimentation électrique de central est connectée au dispositif alimenté électriquement par l'intermédiaire des lignes d'abonnés, le dispositif alimenté électriquement comporte le condensateur caractéristique, dans lequel le circuit comparateur, les lignes d'abonnés et le condensateur caractéristique forment une boucle de charge/décharge à résistance-condensateur.

**4.** Système d'alimentation électrique à distance selon la revendication 3, **caractérisé en ce que** le dispositif alimenté électriquement comprend en outre un circuit d'isolation qui est connecté aux deux bornes du condensateur caractéristique et isole le condensateur caractéristique d'autres condensateurs du dispositif alimenté électriquement.

**5.** Système d'alimentation électrique à distance selon la revendication 4, **caractérisé en ce que** le circuit d'isolation est un circuit à diode ou un redresseur en pont.

**6.** Système d'alimentation électrique à distance selon la revendication 3, **caractérisé en ce que** le condensateur caractéristique est un condensateur destiné à stocker de l'énergie électrique et/ou à effectuer un filtrage dans le dispositif alimenté électriquement.

**7.** Système d'alimentation électrique à distance selon la revendication 3 ou 6, **caractérisé en ce que** le dispositif alimenté électriquement comprend en outre un transformateur de signal et **en ce que** le condensateur caractéristique est disposé sur une dérivation centrale du transformateur de signal.

**8.** Procédé de détection d'un dispositif alimenté électriquement, consistant à :

appliquer une tension de test à un circuit comparateur et fournir la tension de test à un condensateur caractéristique du dispositif alimenté électriquement par l'intermédiaire de lignes d'abonnés ;
interrompre l'application de la tension de test sous le contrôle d'un circuit de chronométrage et de commande lorsqu'un niveau de sortie du circuit comparateur est un premier niveau afin qu'une boucle de charge/décharge formée des lignes d'abonnés et du condensateur caractéristique se décharge, et déclencher le chronométrage du circuit de chronométrage et de commande ; et
interrompre le chronométrage du circuit de chronométrage et de commande lorsque la boucle de charge/décharge se décharge pour faire en sorte que le niveau de sortie du circuit comparateur soit un second niveau, obtenir un temps de décharge, et
déterminer si le dispositif alimenté électriquement est prêt en fonction du temps de décharge.

**9.** Procédé selon la revendication 8, **caractérisé en ce que** l'étape consistant à déterminer si le dispositif alimenté électriquement est prêt en fonction du temps de décharge consiste à :

calculer une capacité totale de l'ensemble de la boucle de charge/décharge en fonction du temps de décharge et déterminer si le dispositif alimenté électriquement est prêt en fonction de la capacité totale calculée de la boucle ; déterminer que le dispositif alimenté électriquement est connecté de manière fiable lorsque la capacité totale est supérieure au condensateur caractéristique, et déterminer en conséquence que le dispositif alimenté électriquement est prêt ; et dans le cas contraire, déterminer que le dispositif alimenté électriquement n'est pas prêt.

**10.** Procédé selon la revendication 9, **caractérisé en ce que** la capacité totale de l'ensemble de la boucle de charge/décharge est calculée conformément à l'équation suivante :

$$U_c = U_0 \times e^{-t/\tau}$$

où $\tau$ = RC, R est une valeur de résistance équivalente de la boucle de charge/décharge, C est une capacité équivalente de la boucle de charge/décharge, $U_c$ est une tension finale du condensateur équivalent, $U_0$ est une tension initiale du condensateur équivalent.

11. Procédé selon la revendication 8, **caractérisé en ce que** le condensateur caractéristique est un condensateur destiné à stocker de l'énergie électrique et/ou à effectuer un filtrage dans le dispositif alimenté électriquement.

Fig.1

EP 1 995 844 B1

Fig.2

Fig.3

Fig.4

EP 1 995 844 B1

Fig.5

EP 1 995 844 B1

Fig.6

Fig.7

**REFERENCES CITED IN THE DESCRIPTION**

**Patent documents cited in the description**

- CN 200610058189
- US 3870822 A
- GB 2223379 A